# EUROPEAN PATENT SPECIFICATION

(11) **EP 3 729 913 B1**
(45) Date of publication and mention of the grant of the patent: **26.07.2023**
(21) Application number: 19743200.8
(22) Date of filing: 08.01.2019
(51) Int. Cl.: H05B 47/18, H05B 45/50

(54) **DALI CIRCUIT, CONTROLLING METHOD AND EQUIPMENT**
DALI-SCHALTUNG, STEUERVERFAHREN UND VORRICHTUNG
CIRCUIT DALI, PROCÉDÉ DE COMMANDE ET ÉQUIPEMENT

(30) Priority: 26.01.2018 WO PCT/CN2018/074291
(43) Date of publication of application: 28.10.2020
(73) Proprietor: Tridonic GmbH & Co. KG, 6851 Dornbirn (AT)
(72) Inventor: LI, Xinhai, Shenzhen, Guangdong 518109 (CN); LIN, Yaofeng, Shenzhen, Guangdong 518109 (CN)
(74) Representative: Rupp, Christian
(86) International application number: PCT/CN2019/070822
(87) International publication number: WO 2019/144799

(56) References cited:
- WO-A2-02/082283
- CN-A- 104 081 881
- CN-A- 104 202 866
- CN-A- 105 898 935
- CN-U- 204 498 429
- US-A1- 2005 162 098
- US-A1- 2015 022 100
- US-A1- 2017 181 240
- US-B2- 9 445 466

## Description

### TECHNICAL FIELD

Embodiments of the present disclosure generally relate to the field of lighting, and more particularly, to a DALI circuit, a controlling method and an equipment.

### BACKGROUND

This section introduces aspects that may facilitate better understanding of the present disclosure. Accordingly, the statements of this section are to be read in this light and are not to be understood as admissions about what is in the prior art or what is not in the prior art.

In the field of LED (Light Emitting Diode) lighting, it is often needed to configure a LED driving current, which is used to drive LED. Users usually get different driving current by various technologies, such as I-select, ready-to-mains (R2M) and DALI (Digital Addressable Lighting Interface), etc.

For the technology of DALI, a DALI interface supply circuit connects to a driver. The driver connects to a lighting module, and provides driving current to the lighting module. WO 02/082283 A2 discloses a known DALI lighting interface supply circuit.

DALI stands for "Digital Addressable Lighting Interface". The DALI standard was developed for modem lighting systems. This standard stipulates that a plurality of actuators, such as lighting units, preferably comprising a driver and a lighting module, sensors (e.g. light or presence sensors) and also emergency light units can be controlled from a central control via a DALI bus. The central control is connected to the DALI bus, in addition to command data, also a DC voltage with 9.5 Volts, or up to 22.5 Volts, which creates operating voltage for these actuators as they have no access to the AC voltage network, or are not supposed to be connected to it.

The DALI bus is thus an example of a data bus which in the standby mode supplies voltage, in particular DC voltage.

In view of the fact that the DALI standard allows to connect up to 64 addressable actuators to the DALI bus, it is understood that one actuator can consume from the DALI bus a DC voltage for which the upper limit is 2 mA. The maximum allowable total current consumption is 250 mA.

### SUMMARY

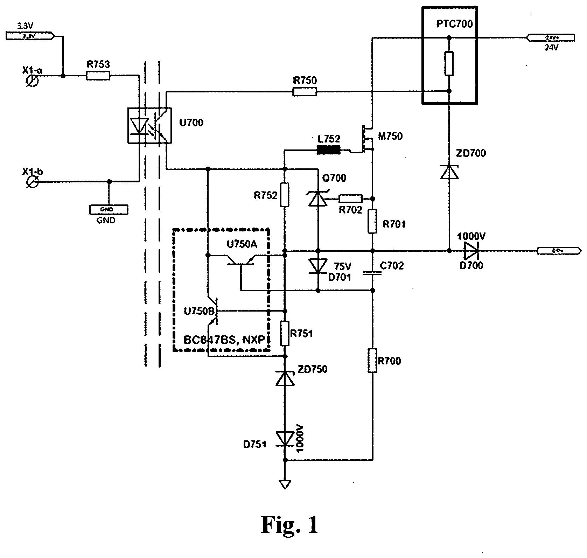

Fig. 1 is a diagram of a DALI interface supply circuit in related art. As shown in Fig. 1, a positive temperature coefficient (PTC) resistor PTC700 is used for protection of reverse connection of a current output port 101 and a ground port 102 of the DALI interface supply circuit. PTC 700 is a 200°C PTC, when temperature of PTC700 is higher than 200°C, its resistance increases quickly.

However , inventor of this disclosure found the following limitation in Fig. 1:
1. PTC700 is quite expensive, and may be damaged when the current output port and the ground port of the DALI circuit are reversely connected;
2. When reverse connection occurs, the current through a Zener diode ZD700 is quite high before the temperature of PTC700 raises to 200°C. That means the reliability of ZD700 could be an issue.
3. PTC700 is a 200°C PTC, which is too hot especially for indoor application.

The present application is directed to a lighting interface supply circuit as defined in claim 1, and to a controlling method of a lighting interface supply circuit as defined in claim 5. Further embodiments are defined in the dependent claims. In general, embodiments of the present disclosure provide a lighting interface supply circuit, preferably a DALI (Digital Addressable Lighting Interface) interface supply circuit, a controlling method and equipment. A protecting transistor (M710) is used instead of PTC700 for reverse connection protection. Therefore, lower cost and more reliable protection are achieved. In addition, when reverse connection occurs, the behavior of the circuit is the same as the standard DALI interface supply circuit, so that DALI 2.0 can be supported. The lighting interface supply circuit may be selectively disabled, so that DALI 2.0 can be supported.

In a first aspect, there is provided a lighting interface supply circuit, preferably a DALI (Digital Addressable Lighting Interface) supply circuit, including:
a current generator, configured to generate current according to a controlling signal, by connecting to a first voltage port;
a current output port, configured to output the current;
a ground port, configured to connect to ground voltage; and
a first protecting transistor (M710), configured to connect between the first voltage port and the current generator, the first transistor is configured to disconnect the current generator and the first voltage port, when the current output port and the ground port are reversely connected.

The lighting interface supply circuit further includes:
a second protecting transistor (U750A), configured to control the first transistor to disconnect the current generator and the first voltage port, when the current output port and the ground port are reversely connected.

The second protecting transistor includes:
a first pin, configured to connect to the ground port;
a second pin, configured to connect to the current output port; and
a third pin, configured to connect to the first protecting transistor.

The first protecting transistor (M710) includes:
a first pin, configured to connects to the first voltage port through a first resistor (R710);
a second pin, configured to connect to the current output port through a first Zener diode (ZD700); and
a third pin, configured to connects to the second protecting transistor.
In an embodiment, the lighting interface supply circuit further includes:
a second Zener diode (ZD710), configured to connect between the third pin and the second pin of the first protecting transistor.

In an embodiment, the lighting interface supply circuit further includes:
a first capacitor (C710), configured to connect between the third pin and the second pin of the first protecting transistor.

In a second aspect, there is provided a controlling method of a lighting interface supply circuit, preferably a DALI (Digital Addressable Lighting Interface) supply circuit, the method includes:
generating current according to a controlling signal, by a current generator that connects to a first voltage port;
outputting the current by a current output port; and
disconnecting the current generator and the first voltage port by a first protecting transistor (M710), when the current output port and a ground port are reversely connected.

The method further includes:
controlling the first transistor to disconnect the current generator and the first voltage port, when the current output port and the ground port are reversely connected.

In a third aspect, there is provided a lighting equipment, including a driver, a lighting module, and the lighting interface supply circuit according to the first aspect of the embodiments. The lighting interface supply circuit is connected to the driver, the driver is connected to the lighting module, and configured to provide driving current to the lighting module.

The driver may include a lighting interface communication circuit. The driver may receive control commands from a lighting bus, e.g. DALI bus, connected to the lighting interface communication circuit. The driver may operate the lighting module according to the received commands from the lighting bus.

The lighting interface communication circuit may be formed as described in WO 2015/062837 A1.

The driver may comprise a controller which controls the operation of the driver, for instance the current provided to the lighting module.

According to various embodiments of the present disclosure, a protecting transistor (M710) is used instead of PTC700 for reverse connection protection. Therefore, lower cost and more reliable protection are achieved, and DALI 2.0 is supported.

The disclosure also relates to a lighting interface supply circuit which is capable to supply a voltage to the current output port 72 and to the ground port 73 which may be used for instance to power sensors with voltage connected to the current output port 72 and to the ground port 73.

In an embodiment, the method further includes:
controlling the first transistor to disconnect the current generator and the first voltage port, when a disabling signal has been received.

The disabling signal may be a signal, for instance a control command, received by the lighting interface communication circuit.

The disclosure further provides lighting interface circuit, comprises a controlling circuit and the lighting interface supply circuit according to one of the embodiment, the controlling circuit is connected to a bus, the controlling circuit comprises: a controller (MCU), configured to receive a first signal from the bus, send a second signal to the bus, and send the controlling signal to the lighting interface supply circuit.

In an embodiment, the lighting interface circuit further comprises:a rectifier circuit (D140), configured to receive the first signal at a first input port (3) and a second input port (4), and output a first voltage at a first output port (1) and a second output port (2);a current source circuit, configured to be coupled between the first output port (1) and a first optical coupler (U141);the first optical coupler (U141), configured to be also coupled to the controller (MCU), the first optical coupler (U141) generates an input controlling signal according to the output current of the current source circuit.

In an embodiment, the lighting interface circuit further comprises: a Darlington circuit, configured to have at least two transistors (Q142, Q143), the Darlington circuit is coupled between the first output port (1) and the second output port (2); a second optical coupler (U140), configured to be coupled to the controller (MCU) and the Darlington circuit, the second optical coupler (U140) generates a drive signal according to a first output controlling signal of the controller (MCU), the drive signal is used for driving the Darlington circuit, the Darlington circuit is used for generating a second voltage at the first output port (1) and the second output port (2) according to the drive signal, the rectifier circuit (D140) outputs the second signal from the first input port (3) and the second input port (4) according to the second voltage.

### BRIEF DESCRIPTION OF THE DRAWINGS

The above and other aspects, features, and benefits of various embodiments of the disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Fig. 1 is a diagram of a DALI interface supply circuit in related art;
Fig. 2 is a diagram of a lighting interface supply circuit accordance with an embodiment of the present disclosure;
Fig. 3 shows a flowchart of a controlling method 300 of the lighting interface supply circuit;
Fig. 4 is a diagram of a lighting interface circuit in accordance with an embodiment of the present disclosure

### DETAILED DESCRIPTION

The present disclosure will now be discussed with reference to several example embodiments. It should be understood that these embodiments are discussed only for the purpose of enabling those skilled persons in the art to better understand and thus implement the present disclosure, rather than suggesting any limitations on the scope of the present disclosure. The invention is defined by the appended claims.

As used herein, the terms "first" and "second" refer to different elements. The singular forms "a" and "an" are intended to include the plural forms as well, unless the context clearly indicates otherwise. The terms "comprises," "comprising," "has," "having," "includes" and/or "including" as used herein, specify the presence of stated features, elements, and/or components and the like, but do not preclude the presence or addition of one or more other features, elements, components and/or combinations thereof. The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

### First aspect of embodiments

A lighting interface supply circuit is provided in a first embodiment. The lighting interface supply circuit may form a DALI (Digital Addressable Lighting Interface) supply circuit.

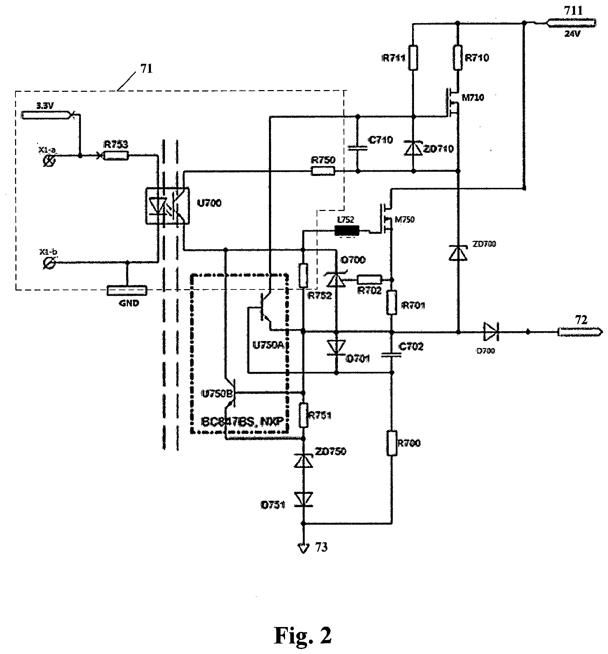

Fig. 2 is a diagram of a lighting interface supply circuit accordance with an embodiment of the present disclosure. As shown in Fig. 2, the lighting interface supply circuit 7 includes a current generator 71, a current output port 72, a ground port 73, and a first protecting transistor M710. The lighting interface supply circuit 7 may form a DALI (Digital Addressable Lighting Interface) supply circuit.

In the embodiment, the current generator 71 is configured to generate current according to a controlling signal, by connecting to a first voltage port 711; the current output port 72 is configured to output the current; the ground port 73 is configured to connect to ground voltage.

A driver may include a lighting interface communication circuit (not shown here). The driver may receive and send digital commands from a digital lighting bus, e.g. DALI bus, connected to the lighting interface communication circuit.

The inputs of the lighting interface communication circuit may be connected to the current output port 72 and to the ground port 73.

A sensor may be connected to the current output port 72 and to the ground port 73 as well as to the ports of the lighting interface communication circuit. The sensor may be used powered with voltage and / or current supplied by the current output port 72 and to the ground port 73.

Information, e,g, digital lighting control commands, preferably DALI commands, may be send out from the sensor and received by the driver via the lighting interface communication circuit.

The driver may include a switched low voltage supply, preferably an isolated low voltage power supply. The switched low voltage supply may supply the controller and / or other components of the driver with a supply voltage.

The switched low voltage supply may comprise an output part which may be connected to the first voltage port 711. In case that the switched low voltage supply is formed by an isolated low voltage power supply the output part connected to the first voltage port 711 is galvanically isolated from the primary side of the isolated low voltage power supply. The isolated low voltage power supply may be formed by a flyback converter.

In the embodiment, the first protecting transistor (M710) connects between the first voltage port 711 and the current generator 71, and the first transistor M710 is configured to disconnect the current generator 71 and the first voltage port 711, when the current output port 72 and the ground port 73 are reversely connected, so as to disable the current source, and all components are well protected.

According to the embodiments, the protecting transistor M710 is used instead of PTC700 for reverse connection protection. Therefore, lower cost and more reliable protection are achieved. In addition, when reverse connection occurs, the behavior of the circuit is the same as the standard DALI interface supply circuit, so that DALI 2.0 can be supported.

In the embodiment, as shown in Fig. 2, the lighting interface supply circuit 7 further includes a second protecting transistor U750A. The second protecting transistor U750A is configured to control the first transistor M710 to disconnect the current generator 71 and the first voltage port 711, when the current output port 72 and the ground port 73 are reversely connected.

In the embodiment, as shown in Fig. 2, the second protecting transistor U750A includes a first pin, a second pin and a third pin. The second protecting transistor U750A may be bipolar transistor, for example, NPN bipolar transistor. The first pin, the second pin and the third pin may be base electrode, emitter and collector of the bipolar transistor, respectively. It is noted that, the embodiment is not limited thereto, the second protecting transistor U750A may be other type of transistor.

In the embodiment, for the second protecting transistor U750A, the first pin connects to the ground port 73; the second pin connects to the current output port 72; and the third pin connects to the first protecting transistor M710.

In the embodiment, the first protecting transistor M710 includes a first pin, a second pin and a third pin. The first protecting transistor M710 may be MOS transistor, for example, NMOS transistor. The first pin, the second pin and the third pin may be drain, source, and gate of the MOS transistor, respectively. It is noted that, the embodiment is not limited thereto, the first protecting transistor M710 may be other type of transistor.

In the embodiment, the first protecting transistor M710, the first pin connects to the first voltage port 711 through a first resistor R710; the second pin connects to the current output port 72 through a first Zener diode ZD700, for example, the breakdown voltage of ZD700 is 15V; and the third pin connects to the second protecting transistor U750A, for example, the third pin of the first protecting transistor M710 connects to the third pin of the second protecting transistor U750A.

In the embodiment, when the current output port 72 and the ground port 73 are reversely connected, the second protecting transistor U750A will be turned off, and the first protecting transistor M710 is turned on so that the first voltage port 711 provides a first voltage to the current generator 71. The current generator 71 generates current, so as the lighting interface supply circuit 7 is able to work as a current source.

In the embodiment, when the current output port 72 and the ground port 73 are reversely connected, the second protecting transistor U750A will be turned on to turn off the first protecting transistor M710 immediately. The current generator 71 disconnects with the first voltage port 711, so that the current generator 71 will not generate current, the function of current source is disabled and all components are well protected. In addition, the behavior of the lighting interface supply circuit 7 is the same with the standard DALI interface supply circuit, so that DALI 2.0 can be supported by the lighting interface supply circuit 7.

In the embodiment, as shown in Fig. 2, the lighting interface supply circuit 7 further includes a second Zener diode ZD710. The second Zener diode ZD710 connects between the third pin and the second pin of the first protecting transistor M710.

In the embodiment, as shown in Fig. 2, the lighting interface supply circuit 7 further includes a first capacitor C710. The first capacitor C710 connects between the third pin and the second pin of the first protecting transistor M710.

In the embodiment, as shown in Fig. 2, the lighting interface supply circuit 7 further includes a resistor R711, which connects between the first pin and the third pin of the first protecting transistor M710.

In the embodiment, as shown in Fig. 2, the lighting interface supply circuit 7 further includes a resistor transistor U750B. The transistor U750B and the second protecting transistor U750A may be integrated in one packaged device, for example, the packaged device is BC847BS, made by NXP.

In the embodiment, as shown in Fig. 2, the current generator 71 may receive the controlling signal from ports X1-a and X1-b. A controller controlling the operation of the driver may be connected to the ports X1-a and X1-b. The controller may enable or disable the current generator 71 by the controlling signal outputted via the ports X1-a and X1-b. An optical coupler U700 in the current generator 71 connects to the first voltage port 711 through the first protecting transistor M710 and the first resistor R710. The working principle of the current generator 71 may be referred to related art.

In the embodiment, as shown in Fig. 2, the lighting interface supply circuit 7 further includes a resistor R700, a resistor R751, a Zener diode ZD750, a diode D751, a diode D701, a diode D700, a diode Q700, a capacitor C702, a resistor R701, a resistor R702, a transistor M750, an inductor L752 etc. The work principle for these components may be referred to related art.

As can be seen from the above embodiments, the protecting transistor M710 is used instead of PTC700 for reverse connection protection. Therefore, lower cost and more reliable protection are achieved. In addition, when reverse connection occurs, the behavior of the circuit is the same as the standard DALI interface supply circuit, so that DALI 2.0 can be supported.

The controller may disable by the controlling signal outputted via the ports X1-a and X1-b the operation of the current generator 71. Such disabling of the current generator 71 may be for instance initiated after reception of a disabling signal, which may be for instance a control command, received by the lighting interface communication circuit.

### Second aspect of embodiments

A controlling method of a lighting interface supply circuit, preferably a DALI (Digital Addressable Lighting Interface) circuit of the first aspect of embodiments is provided in an embodiment. The same contents as those in the first aspect of embodiments are omitted.

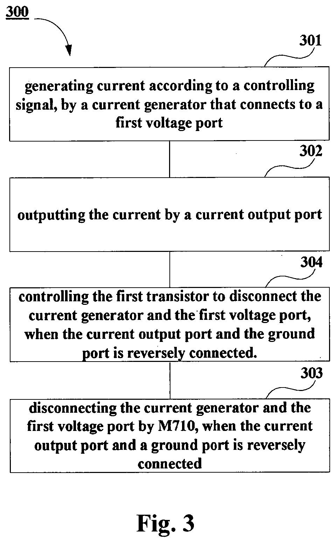

Fig. 3 shows a flowchart of a controlling method 300 of the lighting interface supply circuit.

As shown in Fig. 3, the method 300 includes:
Block 301: generating current according to a controlling signal, by a current generator that connects to a first voltage port;
Block 302: outputting the current by a current output port;
Block 303: disconnecting the current generator and the first voltage port by a first protecting transistor (M710), when the current output port and a ground port are reversely connected.

As shown in Fig. 3, the method 300 further includes:
Block 304: controlling the first transistor to disconnect the current generator and the first voltage port, when the current output port and the ground port are reversely connected.

As can be seen from the above embodiments, the protecting transistor M710 is used instead of PTC700 for reverse connection protection. Therefore, lower cost and more reliable protection are achieved. In addition, when reverse connection occurs, the behavior of the circuit is the same as the standard DALI interface supply circuit, so that DALI 2.0 can be supported.

### Third aspect of embodiments

A lighting interface circuit is provided in an embodiment. The lighting interface circuit includes a controlling circuit and the lighting interface supply circuit according to the first aspect of embodiments.

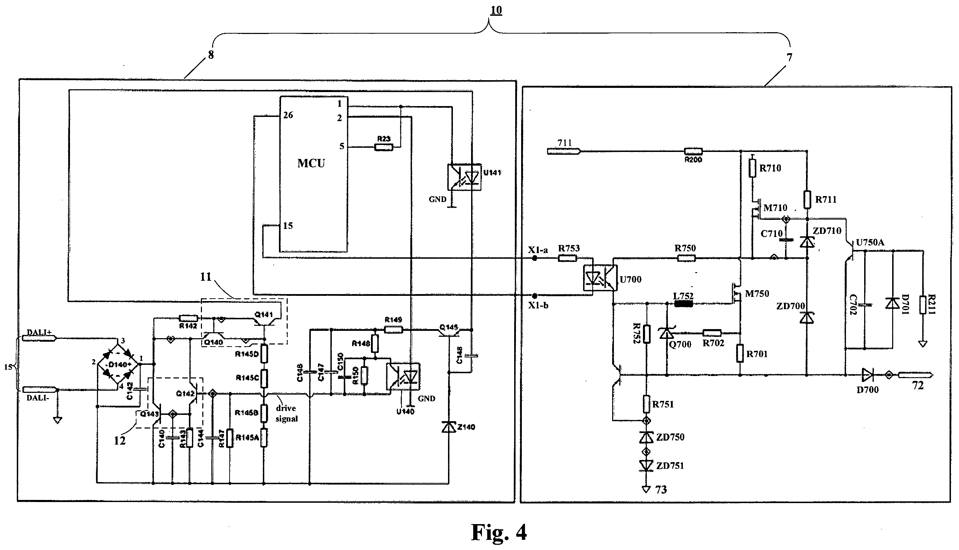

Fig. 4 is a diagram of a lighting interface circuit in accordance with an embodiment of the present disclosure. As shown in Fig. 4, the lighting interface circuit 10 includes a controlling circuit 8 and the lighting interface supply circuit 7. The lighting interface circuit 10 may be a DALI (Digital Addressable Lighting Interface) circuit.

As shown in Fig. 4, the controlling circuit 8 may be connected to a bus 15. The bus may be a DALI bus.

The controlling circuit 8 may include a controller (MCU). The controller may be a micro controller unit. The controller may be configured to receive a first signal from the bus 15, send a second signal to the bus 15, and send the controlling signal to the lighting interface supply circuit 7.

As shown in Fig. 4, the lighting interface circuit may further include a rectifier circuit (D140). The rectifier circuit (D140) may be a bridge rectifier, which include 4 diodes. The rectifier circuit (D140) may have a first input port (3), a second input port (4), a first output port (1) and a second output port (2). The first input port (3) and the second input port (4) are connected to the bus 15.

On one hand, the rectifier circuit (D140) may receive the first signal at the first input port (3) and the second input port (4) from the bus 15, rectify the first signal, and output a first voltage at the first output port (1) and the second output port (2).

On the other hand, the rectifier circuit (D140) may receive a second voltage at the first output port (1) and the second output port (2), generate the second signal at the first input port (3) and the second input port (4), and output the second signal from the first input port (3) and the second input port (4) to the bus 15.

As shown in Fig. 4, the lighting interface circuit 10 may further include a current source circuit 11, which has at least two transistors Q140 and Q141. The current source circuit 11 may be coupled between the first output port (1) and a first optical coupler (U141).

The first optical coupler (U141) may be coupled to the controller (MCU). The first optical coupler (U141) may generate an input controlling signal according to an output current of the current source circuit 11. The input controlling signal may be inputted to the controller MCU from terminal 1 of the controller MCU. Terminal 1 of the controller MCU may be named as DALI _IN_Opto. Terminal 5 of the controller MCU may be connected to the terminal 1 via a resistor R23, the terminal 5 may output a predetermined voltage. Terminal 5 may be named as VDDUC.

As shown in Fig. 4, the lighting interface circuit 10 may further include a Darlington circuit 12, which is configured to have at least two transistors Q142 and Q143. The Darlington circuit 12 is coupled between the first output port (1) and the second output port (2).

As shown in Fig. 4, the lighting interface circuit 10 may further include a second optical coupler (U140), which is configured to be coupled to the controller (MCU) and the Darlington circuit 12.

The second optical coupler (U140) generates a drive signal according to a first output controlling signal of the controller (MCU). The first output controlling signal may be outputted from terminal 2 of the controller (MCU). Terminal 2 may be named as DALI_OUT_Opto.

In the embodiment, the drive signal is used for driving the Darlington circuit 12, for example, the drive signal may be inputted to a gate of a base of the transistor Q142.

The Darlington circuit 12 is used for generating the second voltage at the first output port (1) and the second output port (2) of the rectifier D140, according to the drive signal. The rectifier circuit (D140) outputs the second signal from the first input port (3) and the second input port (4) according to the second voltage.

For example, when the drive signal is at a high level, the transistors Q142 and Q143 are both turned on, the first output port (1) and the second output port (2) are approximately "short circuited". Therefore, the second signal having a low voltage can be generated at the first input port (3) and the second input port (4). The second signal can be send to the bus 15.

As shown in Fig. 4, terminal 15 and terminal 26 of the controller (MCU) may be connected to port X1-a and port X1-b, respectively. Terminal 26 may be named as Power_Dali_EN.

Voltage between the terminal 15 and terminal 26 may form the controlling signal sent to the lighting interface supply circuit 7. For example, the terminal 15 outputs a high voltage, when the terminal 26 outputs a low voltage, the controlling signal indicates an enabling command, U700 conducts, and the lighting interface supply circuit 7 can be enabled; when the terminal 26 outputs a high voltage, the controlling signal indicates an disabling command, U700 is turned off, and the lighting interface supply circuit 7 can be disabled.

In the embodiment, the lighting interface supply circuit 7 may be supplied from an internal power supply path of the driver via the first voltage port 711, as described in the first aspect of embodiments.

In the embodiment, when reverse connection of port 73 and port 72 occurs, the current generator 71 disconnects with the first voltage port 711, and the lighting interface supply circuit 7 is also disabled.

In the embodiment, when the lighting interface supply circuit 7 is disabled, the controlling circuit 8 of the lighting interface circuit 10 can still work, for example, the DALI control for dimming still works. Therefore, the lighting interface circuit 10 may work as a standard DALI interface circuit, so that DALI 2.0 can be supported by the lighting interface circuit 10.

According to the embodiment, the lighting interface supply circuit 7 is integrated in the lighting interface circuit 10, the lighting interface circuit 10 may power the sensors and/or drivers connected to the bus 15. Therefore, an external DALI power supply can be omitted.

According to the embodiment, a current provided by the lighting interface supply circuit 7 can be maximum of 60mA. The standard lighting interface circuit without internal power supply circuit can only provide 2mA maximum current.

According to the embodiment, when the disabling command is received or the reverse connection occurs, the lighting interface supply circuit 7 may be disabled, and the lighting interface circuit 10 may work as a standard DALI interface circuit, so that DALI 2.0 can be supported by the lighting interface circuit 10.

In the embodiment, a lighting equipment is also provided in an embodiment. The lighting equipment includes a driver, a lighting module, and the lighting interface supply circuit according to the first aspect of embodiments.

In the embodiment, the lighting interface supply circuit connects to a driver. The driver connects to the lighting module, and provides driving current to the lighting module to drive the lighting module. The lighting module may be LED lighting module.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing devices. While various aspects of embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

By way of example, embodiments of the present disclosure can be described in the general context of machine-executable instructions, such as those included in program modules, being executed in a device on a target real or virtual processor. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general-purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

The above program code may be embodied on a machine-readable medium, which may be any tangible medium that may contain, or store a program for use by or in connection with an instruction execution system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combination of the foregoing.

More specific examples of the machine-readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

In the context of this disclosure, the device may be implemented in the general context of computer system-executable instructions, such as program modules, being executed by a computer system. Generally, program modules may include routines, programs, objects, components, logic, data structures, and so on that perform particular tasks or implement particular abstract data types. The device may be practiced in distributed cloud computing environments where tasks are performed by remote processing devices that are linked through a communications network. In a distributed cloud computing environment, program modules may be located in both local and remote computer system storage media including memory storage devices.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments.

Although the present disclosure has been described in language specific to structural features and/or methodological acts, it is to be understood that the present disclosure defined in the appended claims is not necessarily limited to the specific features or acts described above. Rather, the specific features and acts described above are disclosed as example forms of implementing the claims. The invention is defined by the appended claims.

## Claims

1. A lighting interface supply circuit (7), comprising:
a current generator (71), configured to generate current according to a controlling signal, the current generator (71) configured to be connected to a first voltage port (711);
a current output port (72); and
a ground port (73), configured to connect to ground voltage;
**characterized in that**:
the current output port (72) is configured to output the current generated by the current generator (71);
the lighting interface supply circuit (7) further comprises:
a first protecting transistor (M710), configured to connect between the first voltage port (711) and the current generator (71), the first protecting transistor (M710) being configured to disconnect the current generator (71) and the first voltage port (711) when the current output port (72) and the ground port (73) are reversely connected; and
a second protecting transistor (U750A), configured to control the first protecting transistor (M710) to disconnect the current generator (71) and the first voltage port (711) when the current output port (72) and the ground port (73) are reversely connected;
the first protecting transistor (M710) comprising:
a first pin, configured to connect to the first voltage port (711) through a first resistor (R710);
a second pin, configured to connect to the current output port (72) through a first Zener diode (ZD700); and
a third pin, configured to connect to the second protecting transistor (U750A); and
the second protecting transistor (U750A) comprising:
a first pin, configured to connect to the ground port (73);
a second pin, configured to connect to the current output port (72); and
a third pin, configured to connect to the first protecting transistor (M710).

2. The lighting interface supply circuit (7) according to claim 1, the lighting interface supply circuit (7) further comprising:
a second Zener diode (ZD710), configured to connect between the third pin and the second pin of the first protecting transistor (M710).

3. The lighting interface supply circuit (7) according to claim 1, the lighting interface supply circuit (7) further comprising:
a first capacitor (C710), configured to connect between the third pin and the second pin of the first protecting transistor (M710).

4. A lighting equipment, comprising a driver, a lighting module, and a lighting interface supply circuit (7) according to one of claims 1-3, wherein:
the lighting interface supply circuit (7) is connected to the driver,
the driver is connected to the lighting module, and configured to provide driving current to the lighting module.

5. A controlling method of a lighting interface supply circuit (7), the method comprises the steps of:
generating (301) current according to a controlling signal, by a current generator (71) that connects to a first voltage port (711);
**characterized by**:
outputting (302) the generated current by a current output port (72); disconnecting (303) the current generator (71) and the first voltage port (711) by a first protecting transistor (M710), when the current output port (72) and a ground port (73) are reversely connected; and
controlling (304) the first protecting transistor (M710) by a second protecting transistor (U750A) to disconnect the current generator (71) and the first voltage port (711), when the current output port (72) and the ground port (73) are reversely connected.

6. A lighting interface circuit, comprising a controlling circuit (8) and the lighting interface supply circuit (7) according to one of claims 1-3, wherein the controlling circuit (8) is connected to a bus, the controlling circuit (8) comprising:
a controller (MCU), configured to receive a first signal from the bus, send a second signal to the bus, and send a controlling signal to the lighting interface supply circuit (7).

7. The lighting interface circuit according to claim 6, wherein the controlling circuit (8) further comprises:
a rectifier circuit (D140), configured to receive the first signal at a first input port (3) and a second input port (4), and output a first voltage at a first output port (1) and a second output port (2);
a current source circuit (11); and
a first optical coupler (U141), configured to be also coupled to the controller (MCU), the first optical coupler (U141) configured to generate an input controlling signal according to an output current of the current source circuit (11);
the current source circuit (11) being configured to be coupled between the first output port (1) and the first optical coupler (U141).

8. The lighting interface circuit according to claim 7, wherein the controlling circuit (8) further comprises:
a Darlington circuit (12), configured to have at least two transistors (Q142, Q143), the Darlington circuit (12) being coupled between the first output port (1) and the second output port (2);
a second optical coupler (U140), configured to be coupled to the controller (MCU) and the Darlington circuit (12), the second optical coupler (U140) configured to generate a drive signal according to a first output controlling signal of the controller (MCU), the drive signal being used for driving the Darlington circuit (12),
the Darlington circuit (12) configured to generate a second voltage at the first output port (1) and the second output port (2) according to the drive signal,
the rectifier circuit (D140) configured to output the second signal from the first input port (3) and the second input port (4) according to the second voltage.

## Patentansprüche

1. Beleuchtungsschnittstellenversorgungsschaltung (7), umfassend:
einen Stromgenerator (71), der konfiguriert ist, um Strom gemäß einem Steuersignal zu generieren, wobei der Stromgenerator (71) konfiguriert ist, um mit einem ersten Spannungsanschluss (711) verbunden zu werden;
einen Stromausgangsanschluss (72); und
einen Erdungsanschluss (73), der konfiguriert ist, um sich mit Erdungsspannung zu verbinden;
**dadurch gekennzeichnet, dass:**
der Stromausgangsanschluss (72) konfiguriert ist, um den Strom, der durch den Stromgenerator (71) generiert wird, auszugeben;
die Beleuchtungsschnittstellenversorgungsschaltung (7) ferner umfasst:
einen ersten Schutztransistor (M710), der konfiguriert ist, um sich zwischen dem ersten Spannungsanschluss (711) und dem Stromgenerator (71) zu verbinden, wobei der erste Schutztransistor (M710) konfiguriert ist, um den Stromgenerator (71) und den ersten Spannungsanschluss (711) zu trennen, wenn der Stromausgangsanschluss (72) und der Erdungsanschluss (73) umgekehrt verbunden sind; und
einen zweiten Schutztransistor (U750A), der konfiguriert ist, um den ersten Schutztransistor (M710) zu steuern, um den Stromgenerator (71) und den ersten Spannungsanschluss (711) zu trennen
wenn der Stromausgangsanschluss (72) und der Erdungsanschluss (73) umgekehrt verbunden sind;
der erste Schutztransistor (M710) umfassend:
einen ersten Pin, der konfiguriert ist, um sich mit dem ersten Spannungsanschluss (711) durch einen ersten Widerstand (R710) zu verbinden;
einen zweiten Pin, der konfiguriert ist, um sich mit dem Stromausgangsanschluss (72) durch eine erste Zenerdiode (ZD700) zu verbinden; und
einen dritten Pin, der konfiguriert ist, um sich mit dem zweiten Schutztransistor (U750A) zu verbinden; und
der zweite Schutztransistor (U750A) umfassend:
einen ersten Pin, der konfiguriert ist, um sich mit dem Erdungsanschluss (73) zu verbinden;
einen zweiten Pin, der konfiguriert ist, um sich mit dem Stromausgangsanschluss (72) zu verbinden; und
einen dritten Pin, der konfiguriert ist, um sich mit dem ersten Schutztransistor (M710) zu verbinden.

2. Beleuchtungsschnittstellenversorgungsschaltung (7) nach Anspruch 1, die Beleuchtungsschnittstellenversorgungsschaltung (7) ferner umfassend:
eine zweite Zenerdiode (ZD71o), die konfiguriert ist, um sich zwischen dem dritten Pin und dem zweiten Pin des ersten Schutztransistors (M710) zu verbinden.

3. Beleuchtungsschnittstellenversorgungsschaltung (7) nach Anspruch 1, die Beleuchtungsschnittstellenversorgungsschaltung (7) ferner umfassend:
einen ersten Kondensator (C710), der konfiguriert ist, um sich zwischen dem dritten Pin und dem zweiten Pin des ersten Schutztransistors (M710) zu verbinden.

4. Beleuchtungsvorrichtung, umfassend einen Treiber, ein Beleuchtungsmodul und eine Beleuchtungsschnittstellenversorgungsschaltung (7) nach einem der Ansprüche 1 bis 3, wobei:
die Beleuchtungsschnittstellenversorgungsschaltung (7) mit dem Treiber verbunden ist,
der Treiber mit dem Beleuchtungsmodul verbunden und konfiguriert ist, um dem Beleuchtungsmodul Treiberstrom bereitzustellen.

5. Steuerverfahren einer Beleuchtungsschnittstellenversorgungsschaltung (7), das Verfahren umfassend die Schritte:
Generieren (301) von Strom gemäß einem Steuersignal durch einen Stromgenerator (71), der sich mit einem ersten Spannungsanschluss (711) verbindet;
**gekennzeichnet durch:**
Ausgeben (302) des generierten Stroms durch einen Stromausgangsanschluss (72);
Trennen (303) des Stromgenerators (71) und des ersten Spannungsanschlusses (711) durch einen ersten Schutztransistor (M710), wenn der Stromausgangsanschluss (72) und ein Erdungsanschluss (73) umgekehrt verbunden sind; und
Steuern (304) des ersten Schutztransistors (M710) durch einen zweiten Schutztransistor (U750A), um den Stromgenerator (71) und den ersten Spannungsanschluss (711) zu trennen, wenn der Stromausgangsanschluss (72) und der Erdungsanschluss (73) umgekehrt verbunden sind.

6. Beleuchtungsschnittstellenschaltung, umfassend eine Steuerschaltung (8) und die Beleuchtungsschnittstellenversorgungsschaltung (7) nach einem der Ansprüche 1 bis 3, wobei die Steuerschaltung (8) mit einem Bus verbunden ist, die Steuerschaltung (8) umfassend:
eine Steuerung (MCU), die konfiguriert ist, um ein erstes Signal von dem Bus zu empfangen, ein zweites Signal an den Bus zu senden und ein Steuersignal an die Beleuchtungsschnittstellenversorgungsschaltung (7) zu senden.

7. Beleuchtungsschnittstellenschaltung nach Anspruch 6, wobei die Steuerschaltung (8) ferner umfasst:
eine Gleichrichterschaltung (D140), die konfiguriert ist, um das erste Signal an einem ersten Eingangsanschluss (3) und einem zweiten Eingangsanschluss (4) zu empfangen und eine erste Spannung an einem ersten Ausgangsanschluss (1) und einem zweiten Ausgangsanschluss (2) auszugeben;
eine Stromquellenschaltung (11); und
einen ersten Optokoppler (U141), der konfiguriert ist, um ebenso mit der Steuerung (MCU) gekoppelt zu werden, wobei der erste Optokoppler (U141) konfiguriert ist, um ein Eingangssteuersignal gemäß einem Ausgangsstrom der Stromquellenschaltung (11) zu generieren;
wobei die Stromquellenschaltung (11) konfiguriert ist, um zwischen dem ersten Ausgangsanschluss (1) und dem ersten Optokoppler (U141) gekoppelt zu werden.

8. Beleuchtungsschnittstellenschaltung nach Anspruch 7, wobei die Steuerschaltung (8) ferner umfasst:
eine Darlington-Schaltung (12), die konfiguriert ist, um mindestens zwei Transistoren (Q142, Q143) aufzuweisen, wobei die Darlington-Schaltung (12) zwischen dem ersten Ausgangsanschluss (1) und dem zweiten Ausgangsanschluss (2) gekoppelt ist;
einen zweiten Optokoppler (U140), der konfiguriert ist, um mit der Steuerung (MCU) und der Darlington-Schaltung (12) gekoppelt zu werden, wobei der zweite Optokoppler (U140) konfiguriert ist, um ein Treibsignal gemäß einem ersten Ausgangssteuersignal der Steuerung (MCU) zu generieren, wobei das Treibsignal zum Treiben der Darlington-Schaltung (12) verwendet wird,
die Darlington-Schaltung (12), die konfiguriert ist, um eine zweite Spannung an dem ersten Ausgangsanschluss (1) und den zweiten Ausgangsanschluss (2) gemäß dem Treibsignal zu generieren,
die Gleichrichterschaltung (D140), die konfiguriert ist, um das zweite Signal von dem ersten Eingangsanschluss (3) und dem zweiten Eingangsanschluss (4) gemäß der zweiten Spannung auszugeben.

## Revendications

1. Circuit d'alimentation d'interface d'éclairage (7), comprenant :
un générateur de courant (71), configuré pour générer un courant en fonction d'un signal de commande, le générateur de courant (71) étant configuré pour être connecté à un premier port de tension (711) ;
un port de sortie de courant (72) ; et
un port de masse (73), configuré pour se connecter à la tension de masse ;
**caractérisé en ce que** :
le port de sortie de courant (72) est configuré pour délivrer en sortie le courant généré par le générateur de courant (71) ;
le circuit d'alimentation d'interface d'éclairage (7) comprend en outre :
un premier transistor de protection (M710), configuré pour se connecter entre le premier port de tension (711) et le générateur de courant (71), le premier transistor de protection (M710) étant configuré pour déconnecter le générateur de courant (71) et le premier port de tension (711) lorsque le port de sortie de courant (72) et le port de masse (73) sont connectés en sens inverse ; et
un second transistor de protection (U750A), configuré pour commander le premier transistor de protection (M710) pour déconnecter le générateur de courant (71) et le premier port de tension (711)
lorsque le port de sortie de courant (72) et le port de masse (73) sont connectés en sens inverse ;
le premier transistor de protection (M710) comprenant :
une première broche, configurée pour se connecter au premier port de tension (711) à travers une première résistance (R710) ;
une deuxième broche, configurée pour se connecter au port de sortie de courant (72) à travers une première diode Zener (ZD700) ; et
une troisième broche, configurée pour se connecter au second transistor de protection (U750A) ; et
le second transistor de protection (U750A) comprenant :
une première broche, configurée pour se connecter au port de masse (73) ;
une deuxième broche, configurée pour se connecter au port de sortie de courant (72) ; et
une troisième broche, configurée pour se connecter au premier transistor de protection (M710).

2. Circuit d'alimentation d'interface d'éclairage (7) selon la revendication 1, le circuit d'alimentation d'interface d'éclairage (7) comprenant en outre :
une seconde diode Zener (ZD710), configurée pour se connecter entre la troisième broche et la deuxième broche du premier transistor de protection (M710).

3. Circuit d'alimentation d'interface d'éclairage (7) selon la revendication 1, le circuit d'alimentation d'interface d'éclairage (7) comprenant en outre :
un premier condensateur (C710), configuré pour se connecter entre la troisième broche et la deuxième broche du premier transistor de protection (M710).

4. Équipement d'éclairage, comprenant un pilote, un module d'éclairage, et un circuit d'alimentation d'interface d'éclairage (7) selon l'une des revendications 1 à 3, dans lequel :
le circuit d'alimentation d'interface d'éclairage (7) est connecté au pilote,
le pilote est connecté au module d'éclairage, et configuré pour fournir un courant de pilotage au module d'éclairage.

5. Procédé de commande d'un circuit d'alimentation d'interface d'éclairage (7), le procédé comprend les étapes consistant à :
générer (301) un courant en fonction d'un signal de commande, par un générateur de courant (71) qui se connecte à un premier port de tension (711) ;
**caractérisé par le fait de** :
délivrer en sortie (302) le courant généré par un port de sortie de courant (72) ;
déconnecter (303) le générateur de courant (71) et le premier port de tension (711) par un premier transistor de protection (M710), lorsque le port de sortie de courant (72) et un port de masse (73) sont connectés en sens inverse ; et
commander (304) le premier transistor de protection (M710) par un second transistor de protection (U750A) pour déconnecter le générateur de courant (71) et le premier port de tension (711), lorsque le port de sortie de courant (72) et le port de masse (73) sont connectés en sens inverse.

6. Circuit d'interface d'éclairage, comprenant un circuit de commande (8) et le circuit d'alimentation d'interface d'éclairage (7) selon l'une des revendications 1 à 3, dans lequel le circuit de commande (8) est connecté à un bus, le circuit de commande (8) comprenant :
un dispositif de commande (MCU), configuré pour recevoir un premier signal à partir du bus, envoyer un second signal au bus, et envoyer un signal de commande au circuit d'alimentation d'interface d'éclairage (7).

7. Circuit d'interface d'éclairage selon la revendication 6, dans lequel le circuit de commande (8) comprend en outre :
un circuit redresseur (D140), configuré pour recevoir le premier signal sur un premier port d'entrée (3) et un second port d'entrée (4), et délivrer en sortie une première tension au niveau d'un premier port de sortie (1) et d'un second port de sortie (2) ;
un circuit de source de courant (11) ; et
un premier coupleur optique (U141), configuré pour être également couplé au dispositif de commande (MCU), le premier coupleur optique (U141) étant configuré pour générer un signal de commande d'entrée en fonction d'un courant de sortie du circuit de source de courant (11);
le circuit de source de courant (11) étant configuré pour être couplé entre le premier port de sortie (1) et le premier coupleur optique (U141).

8. Circuit d'interface d'éclairage selon la revendication 7, dans lequel le circuit de commande (8) comprend en outre :
un circuit Darlington (12), configuré pour avoir au moins deux transistors (Q142, Q143), le circuit Darlington (12) étant couplé entre le premier port de sortie (1) et le second port de sortie (2) ;
un second coupleur optique (U140), configuré pour être couplé au dispositif de commande (MCU) et au circuit Darlington (12), le second coupleur optique (U140) étant configuré pour générer un signal de pilotage en fonction d'un premier signal de commande de sortie du dispositif de commande (MCU), le signal de pilotage étant utilisé pour piloter le circuit Darlington (12),
le circuit Darlington (12) configuré pour générer une seconde tension au niveau du premier port de sortie (1) et du second port de sortie (2) en fonction du signal de pilotage,
le circuit redresseur (D140) étant configuré pour délivrer en sortie le second signal à partir du premier port d'entrée (3) et du second port d'entrée (4) en fonction de la seconde tension.
